# EUROPEAN PATENT APPLICATION

(11) **EP 0 809 390 A2**
(43) Date of publication of application: **26.11.1997**
(21) Application number: 97303492.9
(22) Date of filing: 22.05.1997
(51) Int. Cl.: H04N 1/333

(54) **Image information transmitting apparatus**

(30) Priority: 22.05.1996 JP 127148/96
(71) Applicant: KABUSHIKI KAISHA TOSHIBA, Kawasaki-shi (JP)
(72) Inventor: Takano, Kenji, 1-1 Shibaura 1-chome,Minato-ku Tokyo 105 (JP)
(74) Representative: Waldren, Robin Michael

(57) **Abstract**

Facsimile communication conditions including instructed resolution is set by using a message display unit (93) of an operation-panel (114), a ten key pad (105) is used to input the telephone number of a destined station. A communication start key (120) is depressed so that an original document placed on an original document retainer is read by a scanner. The resolution of a receiving machine is confirmed. Only in a case where the receiving machine has resolution lower than the instructed resolution, read image information is divided and transmitted so that image information is facsimile-transmitted while maintaining the instructed resolution.

## Description

The present invention relates to an image information transmitting apparatus, such as a digital copying machine which has a structure in which a scanner and a printer are separated from each other and which is a hybrid machine having a facsimile function and to an image information transmitting method.

A portion of conventional facsimile apparatuses of a type having a transmission resolution converting function is structured such that the performance of the receiving machine is confirmed by a communication protocol (T. 30 procedure) before the original document to be transmitted is read, and then the reading resolution is determined.

With the foregoing method, the resolution of the receiving machine with respect to the resolution previously instructed by a user is confirmed. If the resolution of the receiving machine is lower than-the resolution instructed by the user of the transmitting machine, the original document is automatically read with the resolution of the receiving machine, and then transmission is started.

The above-mentioned facsimile apparatus is a facsimile apparatus of a type having no image memory. A facsimile apparatus having an image memory is provided with a function of inputting image information of an original document to be transmitted with a resolution instructed by a user and then performing a transmission process.

For example, a hybrid digital copying machine has been developed which is composed of: a copying apparatus structured such that image information read by a scanner is stored in a memory thereof and then image information stored in the memory is recorded on sheets of paper by a printer thereof; and a facsimile apparatus connected to a public line to facsimile-transmit/receive image information.

A hybrid digital copying machine of the foregoing type having a facsimile apparatus has a function of enlarging and outputting fine characters or figures of an original document. If the enlarged image cannot be included on one page, the image is divided into plural pages so as to be transmitted.

The facsimile apparatus of a type for determining the reading resolution after the receiving performance has been confirmed by the communication protocol (T.30 procedure) before the original document to be transmitted is read is structured such that the resolution of the receiving machine with respect to the resolution previously instructed by the user is confirmed. If the resolution of the receiving machine is lower than the resolution instructed by the user of the transmitting machine, the original document is automatically read with the resolution of the receiving machine and then the transmission is started. Therefore, an advantage can be realized in that deformation of a process pattern can be prevented because an image process, such as a halftone process, is performed in accordance with the resolution of the receiving machine after the performance of the receiving machine has been confirmed.

However, since the image information of the original document to be transmitted cannot previously be input to the image memory, there arises a problem in that instruction to perform transmission of a next destination cannot be performed until one communication operation is completed.

Moreover, time instruction transmission and multi-destination transmission cannot be performed with which image information of the original document must be temporarily stored in the image memory.

Since image information is not transmitted with the resolution instructed by the user, the received image output by the receiving machine is different from the image intended by the user to be transmitted.
Therefore, there arises a problem in that fine characters and figures cannot easily be recognized.

To overcome the foregoing problems, a facsimile apparatus has been developed which has a function such that image information of an original document to be transmitted is previously input to the image memory of the facsimile apparatus with the resolution instructed by the user and then the transmission process is performed.

However, the above-mentioned facsimile apparatus, having the structure such that the image is read before the transmission is started, cannot confirm the resolution of the receiving machine when the image is read. If the resolution of the receiving machine is confirmed after transmission has been started, the resolution of image information stored in the image memory and subjected to a binary-coding process is converted from that instructed by the user to the resolution of the receiving machine. Since the image subjected to the halftone process is thinned at this time, the pattern is deformed and the image quality deteriorates.

Since also the foregoing method is performed such that image information is not transmitted with the resolution instructed by the user, the received image output by the receiving machine is different from the image intended by the user to be transmitted.
Therefore, there arises a problem in that fine characters and figures cannot easily be recognized.

The digital copying machine has a function of enlarging and outputting fine characters or figures of an original document to be copied. If a determination is performed that the enlarged image cannot be included in one sheet of recording paper, the image is divided into plural pages before the image is output. Since the enlargement printing operation to output a plurality of pages involves the quantity of binary-coded information to be created after the enlarging process being enlarged as compared with the quantity of information which is created when an equal magnification copying operation is performed by a quantity corresponding to the quantity of information which must be interpolated when the enlargement process is performed, the number of pages is determined in consideration of the quantity of enlargement of information. Then, the image is divided and output.

Since the recording resolution of an equal magnification image and that of the enlarged image are the same in the case of the above-mentioned method, image must be increased by a quantity corresponding to the enlargement magnification when an enlargement output to plural pages is performed. When the above-mentioned function is used to perform the facsimile transmission, the user must previously instruct the enlargement mode.

Since the resolution of the enlarged image is the same as the resolution instructed by the user, binary-coded image information is thinned if the resolution of the receiving machine is low. Therefore, there arises a problem in that the pattern of the image subjected to the halftone process is deformed and thus the quality of the image deteriorates.

As described above, the facsimile apparatus of the type structured such that image information of an original document to be transmitted is previously input to an image memory thereof with the resolution instructed by a user involves reading of an image being performed before communication is started. Therefore, the resolution of the receiving machine cannot be confirmed when the image is read. If the resolution of the receiving machine is confirmed after the transmission has been started, image information stored in the image memory and subjected to the binary-coding process is converted to have a resolution of the receiving machine from the resolution instructed by the user. Therefore, the image subjected to the halftone process is subjected to binary-thinning process and therefore there arises a problem in that the pattern of the image is deformed and the quality of the image deteriorates.

An object of the invention is to improve the image information transmitting apparatus which has a function such as facsimile transmission.

That is, the object of the present invention is to provide an improved image information transmitting apparatus and a facsimile transmission method for the image forming apparatus structured such that image information to be transmitted is not reduced to be adaptable to the resolution of the receiving machine and image information of an original document of, for example, fine characters, and an original document subjected to the halftone process is not thinned to prevent deformation of the pattern of the image and deterioration in the quality of the image when the image information of the original document is transmitted to the receiving machine.

In order to achieve the above object, according to one aspect of the present invention, there is provided an image information transmitting apparatus comprising: reading means for reading an image of an original document; means for storing image information read by the reading means; instruction means for instructing transmission conditions of image information stored in the storage means including resolution of image information when image information is transmitted and providing the instructed resolution; calling means for calling a destined station to which image information is transmitted; receiving means for receiving response information returned from the destined station in response to a call made by the calling means and including the resolution of the destined station; dividing means for dividing image information when the resolution of the destined station included in response information received by the receiving means is lower than the instructed resolution provided by the instructing means; and transmitting means for sequentially transmitting image information divided by the dividing means.

The dividing means includes comparison means for subjecting the resolution of the destined station included in the response signal received by the receiving means and the instructed resolution provided by the instruction means to a comparison; calculating means for calculating the ratio of the resolutions of the destined station and the transmitting station in a case where a result of a comparison performed by the comparison means is such that the resolution of the destined station is lower than the instructed resolution; and means for dividing image information in accordance with the ratio of the resolutions calculated by the calculating means.

The dividing means includes determining means for determining the number of division of image information in accordance with the ratio of the resolutions calculated by the calculating means, and dividing means for enlarging image information in a scanning direction which is divided with a smaller number and dividing enlarged image information with a larger number of division in a case where the number of division determined by the determining means is different between the main scanning direction and the sub-scanning direction.

The dividing means includes means for dividing image information such that adjacent boundary portions are overlapped in a case where the resolution of the destined station included in the response signal received by the receiving-means is lower than the instructed resolution provided by the instructing means.

The resolution of the receiving machine is confirmed when facsimile transmission is performed. If the receiving machine has not the resolution instructed by an operator of the apparatus according to the present invention, read image information is divided when transmitted. Therefore, the instructed resolution can be maintained when image data of an original document is facsimile-transmitted.

This invention can be more fully understood from the following detailed description when taken in conjunction with the accompanying drawings, in which:
FIG. 1 is a cross sectional view showing a digital copying machine according to an image information forming apparatus according to the present invention;
FIG. 2 is a diagram showing the system of the image forming apparatus;
FIG. 3 is a block diagram showing the structure of a scanner portion;
FIG. 4 is a block diagram showing the structure of a SMCPU;
FIG. 5 is a block diagram showing the structure of a printer portion;
FIG. 6 is a block diagram showing the structure of a facsimile portion;
FIG. 7 is a diagram showing the structure of an operation panel;
FIG. 8 is a diagram showing control of G3-mode transmission/receipt in the facsimile communication;
FIG. 9 is a flow chart showing a facsimile operation which is performed when a direct transmission operation is performed;
FIG. 10 is a flow chart showing the facsimile operation which is performed when the direct transmission operation is performed;
FIGS. 11A to 11C are diagrams showing divided images and setting of address to an address control portion;
FIGS. 12A to 12C are diagrams showing divided images and setting of address to the address control portion;
FIGS. 13A to 13C are diagrams showing divided image, setting of a memory administration address and setting of enlargement magnification in a direction in which the number of divisions is small;
FIG. 14 is a flow chart showing a facsimile operation which is performed when memory transmission is performed;
FIG. 15 is a flow chart showing a facsimile operation which is performed when memory transmission is performed; and
FIG. 16 is a diagram showing the schematic structure of a facsimile apparatus according to the present invention.

An embodiment of the present invention will now be described with reference to the drawings.

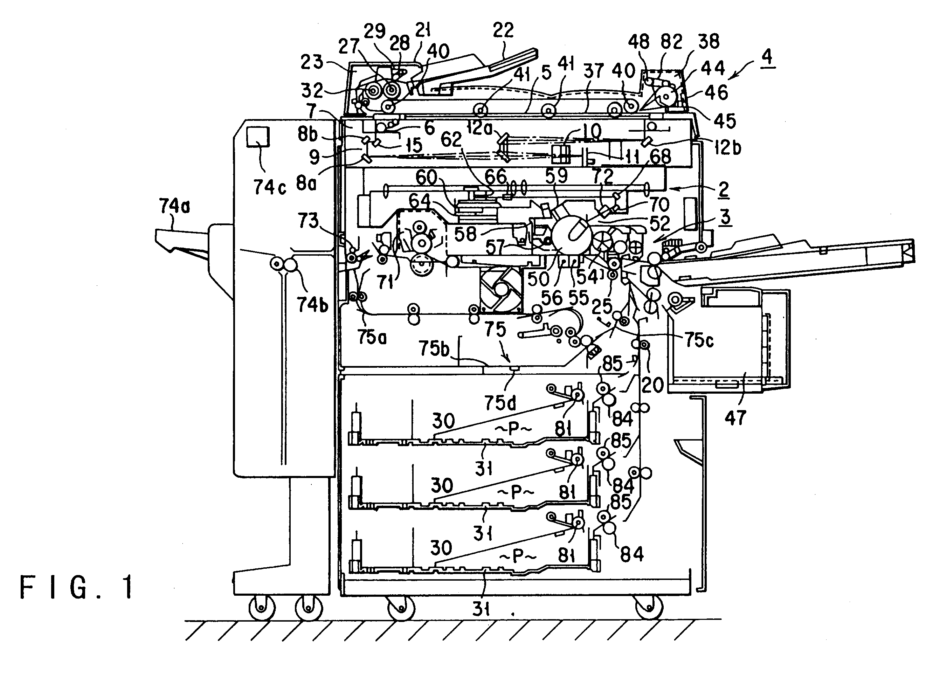

FIG. 1 is a schematic view showing the overall structure of a digital copying machine which is an image forming apparatus according to the present invention. The digital copying machine has a scanner 2 and a printer 3. Moreover, the digital copying machine is provided with an automatic document feeder (ADF) 4 in the upper portion thereof.

The automatic document feeder 4 has a structure such that a cover 21 serving as a frame has a rear end which is attached to the rear end of the upper surface of the body of the digital copying machine by a hinge mechanism (not shown) such that the cover 21 can be opened/closed as desired. Thus, the overall body of the automatic document feeder 4 can be rotated to open the upper surface of a document retainer 5, if necessary. A document feeding frame 22 capable of collectively holding a plurality of original document sheets is disposed at a somewhat right-hand position on the upper surface of the cover 21. A feeding means 23 for sequentially taking out the original document sheets to supply the same to an end (the left-hand end of FIG. 1) of the document retainer 5 is provided at an end of the apparatus. The feeding means 23 has a pickup roller 27 for taking out the original document, a weight plate 28 for pressing the original document against the pickup roller 27, and an empty sensor 29 serving as an original document detection sensor for detecting a state of the original document set on the document feeding frame 22. Moreover, a paper supply roller 32 is disposed at a position to which the original document is conveyed by the pickup roller 27 so that the original document sheets are reliably feed one by one. A document conveyance belt 37 for covering the upper surface of the document retainer 5 is disposed on the upper surface of the document retainer 5. The document conveyance belt 37 comprises a wide endless belt arranged between a pair of belt rollers 40 and having a white outer surface so as to be moved forwards/reversely by a belt drive mechanism (not shown). The document conveyance belt 37 has, on the reverse side which is the inner surface of the same, a plurality of belt retaining rollers 41 for holding the surface of the document conveyance belt 37 on the upper surface of the document retainer 5 and a set switch (not shown) for detecting whether the automatic document feeder 4 is opened. Thus, the original document fed by the feeding means 23 is conveyed from an end the left-hand end) of the document retainer 5 to another end (the right-hand end) of the same. A paper discharge means 38 is disposed in the right-hand portion of the apparatus, the paper discharge means 38 comprising a conveyance roller 44, a pinch roller 45 for pressing the original document against the conveyance roller 44 and a paper discharge sensor 46 serving as an original document detection means for detecting the rear end of the original document which is conveyed in the paper discharging direction. A paper discharge roller 48 is disposed downstream of the original document discharge passage. A gate 82 for turning the original document inside out and introducing the original document to the document retainer 5 is disposed in the passage for discharging the original document. Thus, double side copying of the original document can be performed.

The scanner 2 consists of a first carriage 7 having an exposing lamp 6 serving as a light source and a mirror 15, a second carriage 9 having mirrors 8a and 8b for warping the optical path, a lens 10, a CCD sensor 11 for receiving reflected light, a drive system (not shown) for shifting the foregoing elements and an A/D conversion portion (not shown) for converting an output from the CCD sensor 11, that is, converting image data (information) from analog data into digital data. The first and second carriages 7 and 9 are connected to each other through a timing belt (not shown) such that the second carriage 9 can be moved in the same direction in which the first carriage 7 is moved at speed which is half of the speed of the first carriage 7. As a result, scanning can be performed in such a manner that the length of the optical path to the lens 10 is made to be constant. The lens 10 is a fixed focus type lens and arranged to be moved in the direction of the optical axis when the magnification is changed. The CCD sensor 11 has a structure such that one pixel of the original document corresponds to one elements of the CCD sensor 11. An output from the CCD sensor 11 is connected to the A/D conversion portion. The movements of the first and second carriages 7 and 9 and the mirrors 12a and 12b respectively are performed by stepping motors (not shown). The first and second carriages 7 and 9 are moved when a timing belt (not shown) arranged between a drive pulley (not shown) connected to the rotational shaft of the stepping motor and an idle pulley (not shown) is rotated. The lens 10 is moved in the direction of the optical axis to correspond to a spiral movement of a spiral shaft (not shown) realized by the corresponding stepping motor (not shown).

Reference numeral 60 represents a laser diode. A collimate lens 62, a polygonal mirror (polygonal reflecting mirror) 64, a lens 66, a reflecting mirrors 68 and 70 and a lens 72 are disposed to correspond to the laser diode 60 so as to irradiate a photosensitive drum 50 with a laser beam emitted from an exposing unit 52.

The printer 3 is in the form obtained by combining, for example, a laser optical system and an electrophotographic method capable of forming an image on a transfer paper sheet. That is, the printer 3 has a photosensitive drum 50 rotatively supported in a substantially central portion of the apparatus and serving as an image carrier. An exposing unit 52, a developing unit 54, a transfer charger 55, a separation charger 56, a PCC charger 57, a destaticizing lamp 58 and an electrical charger 59 are, in this sequential order, disposed around the photosensitive drum 50. The photosensitive drum 50 is uniformly electrically charged by the electrical charger 59. Moreover, a laser beam is emitted from the scanner 2 so that an image of the original document is formed on the photosensitive drum 50. Thus, an electrostatic latent image is formed on the photosensitive drum 50.

The electrostatic latent image formed on the photosensitive drum 50 is developed by the developing unit 54. Then, the developed image is, by the transfer charger 55, transferred onto copy paper P fed from a paper feeding cassette 30 through a paper feeding roller 20 and an aligning roller 25. The copy paper P having the image transferred by the transfer charger 55 is separated by the separation charger 56 using AC corona discharge so as to be conveyed to a fixing unit 71 by the conveyance belt. The copy paper P having the developed image, which has been melted and fixed by the fixing unit 71, is discharged to a unit 74 having a paper discharge tray 74a by a paper-discharge roller pair 73. The unit 74 has a roller pair 74b for facing down the copy paper P discharged from the paper-discharge roller pair 73. Moreover, the unit 74 has, in the upper portion thereof, a stapler 74c for stapling each set of copied sheets when a staple sorting mode is selected.

On the other hand, developer left on the photosensitive drum 50 after the developed image has been transferred onto the copy paper P and the copy paper P has been separated is cleaned by the PCC charger 57. Then, the destaticizing lamp 58 lowers the potential of the surface of the photosensitive drum 50 to be lower than a predetermined level to enable a next copying operation to be performed.

When a double side copying operation is performed in which images are printed on the two sides of copy paper P, the copy paper P having a developed image melted and fixed by the fixing unit 71 is conveyed through a conveyance passage 75a, and then accumulated on a tray 75b. The copy paper P accumulated on the tray 75b and having an image printed on one side thereof is conveyed to the transfer charger 55 through a conveyance passage 75c so that a developed image is transferred to another side of the copy paper P having no printed image. A paper sensor 75d is disposed in the lower portion of the tray 75b so as to detect existence of copy paper P stacked on the tray 75b.

The conveyance passage 75a, the tray 75b, the conveyance passage 75c and the paper sensor 75d form an automatic double device (ADD) 75 which is an automatic double side inverting mechanism.

Reference numeral 30 represents a plurality of paper feeding cassettes vertically loaded from the front side of the body 1 of the apparatus and serving as paper feeding means. The paper feeding cassette 30 comprises a cassette case 31 which is a box-like member accommodating copy paper P. The removal-directional end of the cassette case 31 is inclined in a direction in which the copy paper P is taken out. The copy paper P accommodated in the cassette case 31 of the paper feeding cassette 30 is picked up and taken out by a pickup roller 81 starting from the uppermost sheet. The copy paper P taken out by the pickup roller 81 and moved to the taking out end of the cassette case 31 is separated one by one by a paper separation portion disposed inner and upper than the taking-out end of the cassette case 31 and composed of a paper feeding roller 84 and a separation roller (or a separation pad) 85 so as to be conveyed to the printer 3.

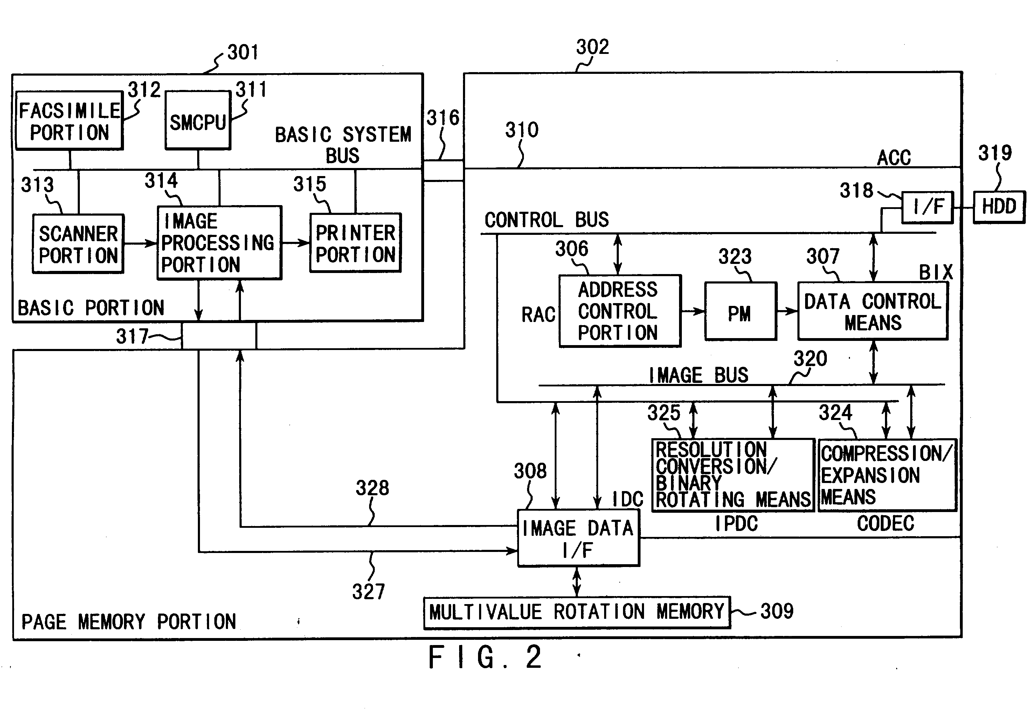

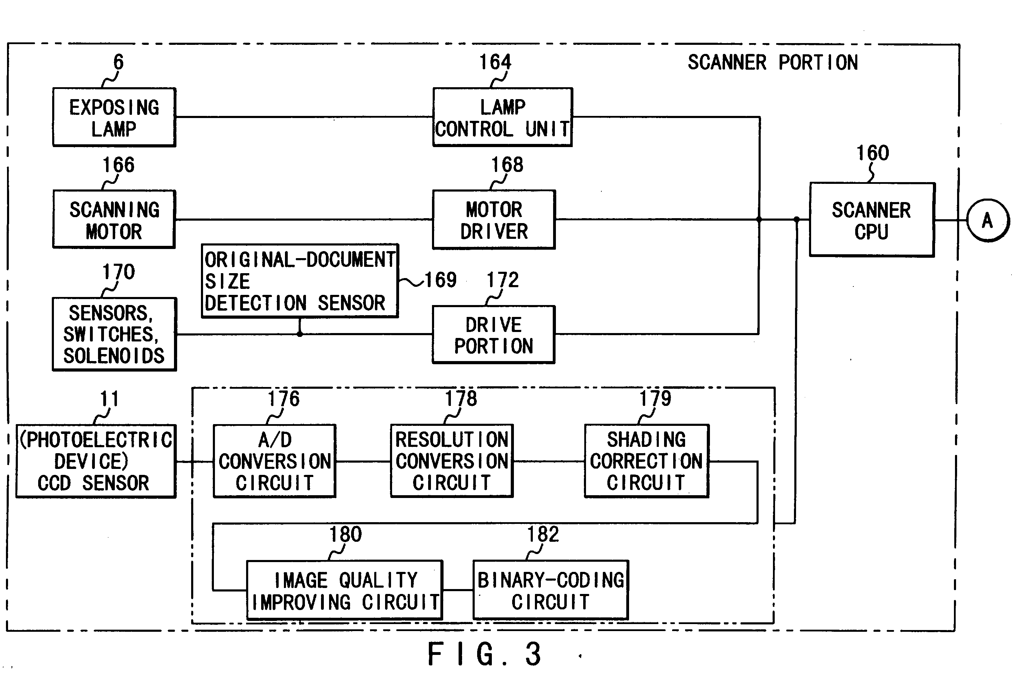

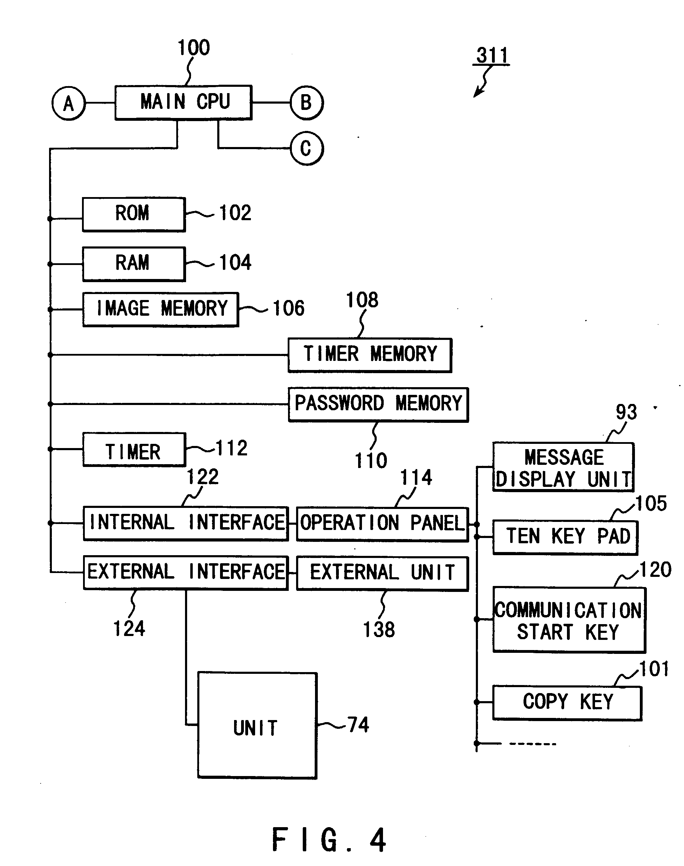

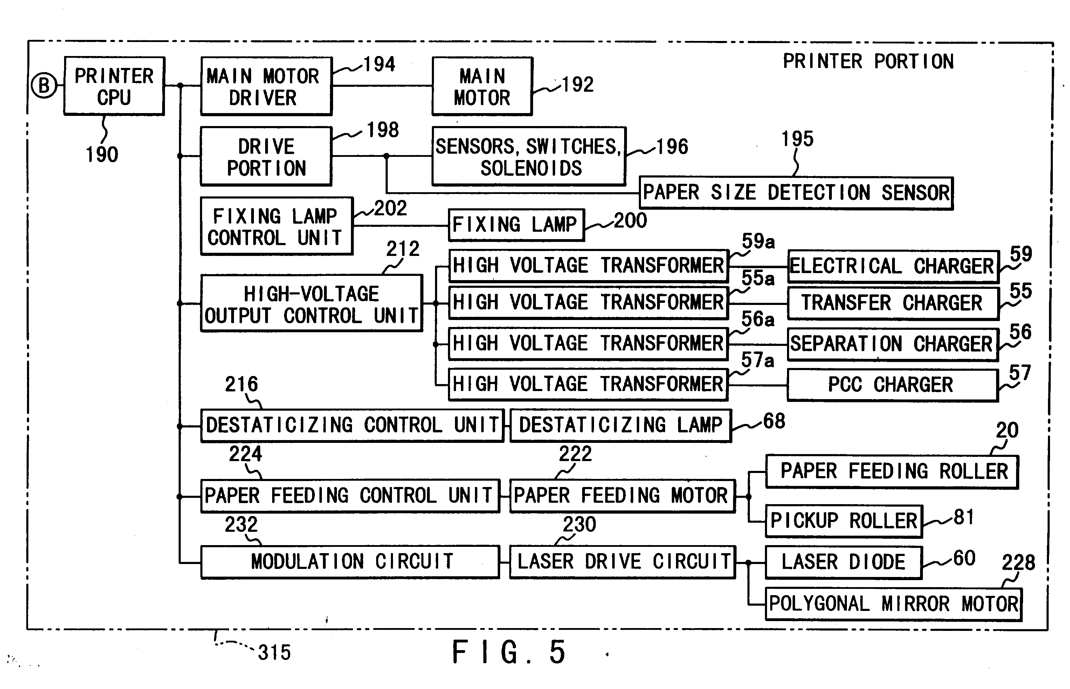

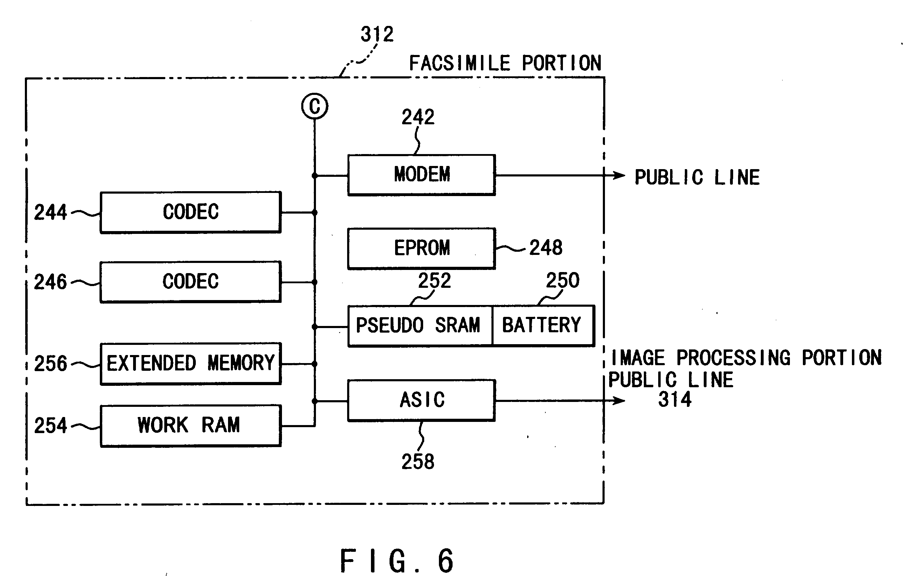

Referring to FIGS. 2 to 6, a control system for the digital copying machine will now be described. FIG. 2 shows the overall structure of the control system for the digital copying machine, FIG. 3 shows the scanner portion, FIG. 4 shows a control means (SMCPU), FIG. 5 shows a printer portion and FIG. 6 shows a facsimile portion.

The control system of the digital copying machine is composed of two main blocks one of which is a basic portion 301 having an image processing portion 314 for connecting the scanner portion 313 and the printer portion 315 to each other and forming the digital copying machine having a facsimile (FAX) portion 312 serving as a facsimile function. Another portion of the control system is a page memory 302 for receiving and storing image data supplied from the basic portion 301 and transfer stored image data to the basic portion 301 so as to realize memory copy.

The basic portion 301 and the page memory 302 are connected to each other by a base-portion system interface 316 for communicating control data and a basic portion image interface 317 for communicating image data. A hard disk 319 is connected to the page memory 302 through an interface 318.

The basic portion 301 comprises an input means (a scanner) 313, an output means (a printer) 315, an image processing means (an image processing portion) 314, a facsimile portion 312 and the control means (SMCPU) 311.

As shown in FIG. 4, a ROM 102, a RAM 104, an image memory 106, a timer memory 108, a password memory 110, a timer 112, an internal interface 122 and an external interface 124 are connected to a main CPU 100 of the control means (the basic portion CPU) 311. An operation panel 114 is connected to the internal interface 122. The operation panel 114 has a message display unit 93, a ten-key pad 105, a copy key 101, a communication start key 120 and the like. The external interface 124 is connected to the unit 74 and an external unit 138.

Image information is stored and accessed by the main CPU 100. When a password code and image information are stored for example, image information read by the scanner 2 under control of the scanner CPU 160 is stored in the image memory 106 to follow an instruction issued from the main CPU 100. The instruction from the main CPU 100 is performed after a mode has been determined in accordance with an input (an input using a key) from the operation panel 114.

Referring to FIG. 3, the detailed structure of the scanner portion 313 will now be described. The scanner CPU 160 of the scanner portion 313 is connected to a lamp control unit 164 for controlling the exposing lamp 6, a motor driver 168 for controlling a scanning motor 166, and a drive portion 172 for controlling the operations of sensors, switches and solenoids 170 including an original-document size detection sensor 169 so as to control the connected units. Moreover, the scanner CPU 160 is connected to an A/D conversion circuit 176 for processing image information supplied from the CCD sensor 11, which is a photoelectric device, a resolution conversion circuit 178, a shading correction circuit 179, an image quality improving circuit 180 and a binary-coding circuit 182 so as to control the connected units.

Referring to FIG. 5, the printer portion 315 will now be described. The printer portion 315 has a printer CPU 190 to which a main motor driver 194 for rotating a main motor 192, a drive portion 198 for operating sensors, switches and solenoids 196 including a paper size detection sensor 195, a fixing-lamp control unit 202 for controlling a fixing lamp 200 of the fixing unit 71, a high-voltage output control unit 212 for controlling the electrical charger 59, the transfer charger 55, the separation charger 56 and the PCC charger 57, a destaticizing lamp control unit 216 for controlling the destaticizing lamp 58, a paper feeding control unit 224 for controlling a paper feeding motor 222 for rotating the paper feeding roller 20 and the pickup roller 81 and a modulation circuit 232 for controlling a laser drive circuit 230 for operating the laser diode 60 and the polygonal mirror motor 228. The printer CPU 190 controls the connected units. High-voltage transformers 59a, 55a, 56a and 57a respectively are connected between the high-voltage output control unit 212 and the following chargers, that is, the electrical charger 59, the transfer charger 55, the separation charger 56 and the PCC charger 57.

The page memory 302 will now be described with reference to FIG. 2. The page memory 302 has a storage means (PM: page memory) 323 for temporarily storing image data, an address control portion 306 for generating addresses in the page memory 323, an image bus 320 for transferring data between the devices in the page memory 302, a data control means 307 for controlling data transference between the page memory 323 and another device through the image bus 320, an image data I/F means 308 for interfacing image data when image data is transferred to the basic portion 301 through the base-portion image interface 317, a resolution conversion/binary rotating means 325 for converting the resolution of image data into the resolution of another device when image data is transmitted to the device having the different resolution, converting the resolution of image data received from a device having a different resolution into the resolution of the printer portion 315 of the basic portion 301 and performing a 90°-rotation process of binary image data, a compression/expansion means 324 for compressing supplied image data for a device for compressing and transmitting image data or storing the same for facsimile transmission or optical disk storage and expanding compressed image data to visualize image data above through the printer portion 315 and a multivalue rotation memory 309 for use when image data is output from the printer portion 315 such that image data is rotated by 90° or -90°.

The facsimile portion 312 will now be described with reference to FIG. 6. The facsimile portion 312 comprises a modem 242 which is a modulation and demodulation unit connected to a public telephone line for establishing the analog line connection, CODECs 244 and 246 which are units for coding/decoding binary image data, an EPROM 248 for a communication control program, a pseudo SRAM 252 which is a means for storing image data and backed up by a battery 250, a work RAM 254 for use when image data is processed, an extension memory 256 and an ASIC 258 for an interface for outputting facsimile-received data to the image processing portion 314.

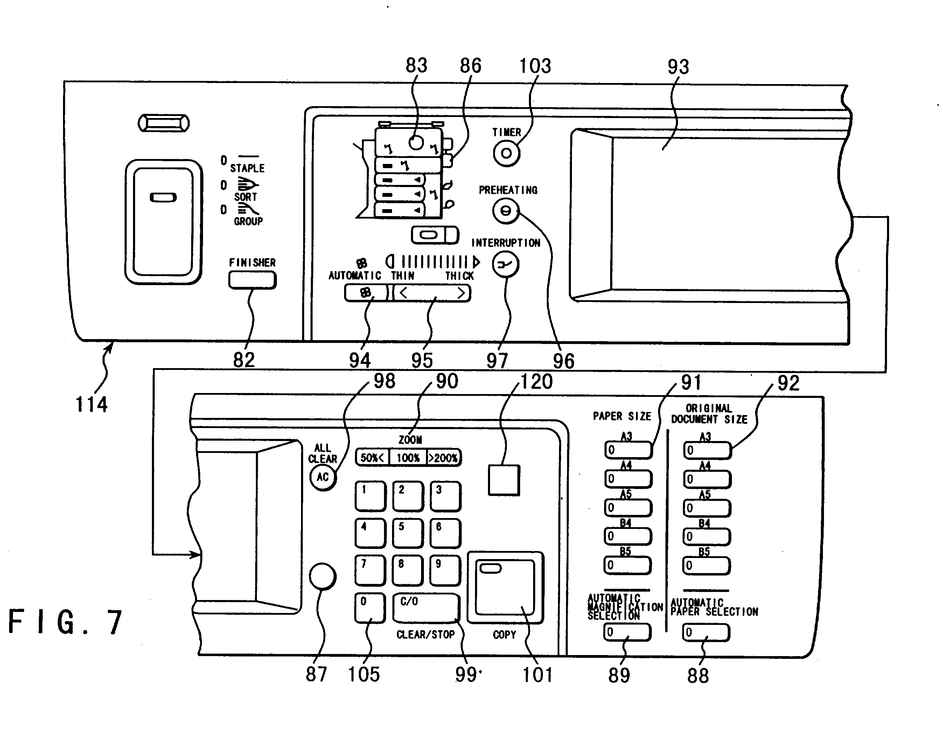

FIG. 7 shows the structure of the operation panel 114. The operation panel 114 has a finisher key 82, a display panel 83, a cassette selection key 86 serving as a selection means for the paper feeding cassette 30, an operation guide key 87, an automatic paper selection key 88, an automatic magnification selection key 89, a zoom/100% key 90, an original-document size key 91, a paper size key 92, a message display portion 93, an automatic density key 94, a manual density key 95, a preheating key 96, an interruption key 97, an all clear key 98, a clear/stop key 99, copy key 101, a timer key 103, a ten-key pad 105 and a communication start key 120.

The finisher key 82 is used when a sorting mode, a group mode or a stapling mode is selected.

The display panel 83 displays various icons, a portion of which are allowed to flicker if necessary to indicate a state of the copying machine.

The cassette selection key 86 is depressed to select another cassette if a cassette which does not have a required size is selected.

The operation guide key 87 having a "HELP" key which is depressed to display a message indicating the operation procedure and which is depressed after the function has been set to confirm the set contents.

The automatic paper selection key 88 is usually set to an automatic paper selection mode to automatically detect the size of an original document set on the document retainer (glass) 5 so as to automatically select paper having the same size as the detected size (only in an equal magnification copying mode).

The automatic magnification selection key 89 is depressed to select an automatically magnification selection mode and to instruct the size of paper so that the size of the original document set on the document retainer (glass) 5 is detected and the copying magnification is automatically calculated.

The zoom/100% key 90 has a "25%<" key which is depressed to reduce the copying magnification to 25% in units of 1%, a ">800%" key which is depressed to enlarge the copying magnification to 800% in units of 1% and a "100%" key which is depressed to restore the magnification to the equal magnification (100%).

The original-document size key 91 is used to set the size of the original document. When the size of paper is selected and the size of the original document is instructed, the copying magnification is automatically set.

The paper size key 92 is depressed when the size of paper is selected.

The message display unit 93 displays the state of the electronic copying machine, the operation procedure and various instruction for a user with characters and pictures. The message display unit 93, serving as a display means, includes a touch panel with which functions can be set. Moreover, the message display unit 93 is used when a various function, such as a forcible overseas mode or an automatic overseas mode, is set.

The automatic density key 94 having an automatic density mode which is selected to cause the electronic copying machine to automatically detect the density of the original document so as to select an optimum copying density.

The manual density key 95 having a manual density mode with which a required copying density can be selected. A "thin" key is depressed by thinning the density into five steps. A "dense key" is depressed to raise the density into five steps.

The preheating key 96 is depressed to start a preheating (power saving) mode in which all of the display lamps are turned off. When a copying operation is restarted, the preheating key 96 is depressed again.

The interruption key 97 is depressed when an interruption copying operation is required to be performed during a continuous copying operation.

The all clear key 98 is depressed to clear all of the selected modes so as to return to the standard state.

The clear/stop key 99 is depressed to correct the number of copies or to stop the copying operation.

The copy key 101 is depressed when a copying operation is started.

The timer key 103 is depressed to display time at which the electronic copying machine will be turned on or off (in a case where a weekly timer has been set).

The ten-key pad 105 is used to set the required number of copies. The number of copies can be set to one to 999 copies. Moreover, the ten-key pad 105 is used to input the dial of the destined station.

The communication start key 120 is depressed when transmission of facsimile communication is started.

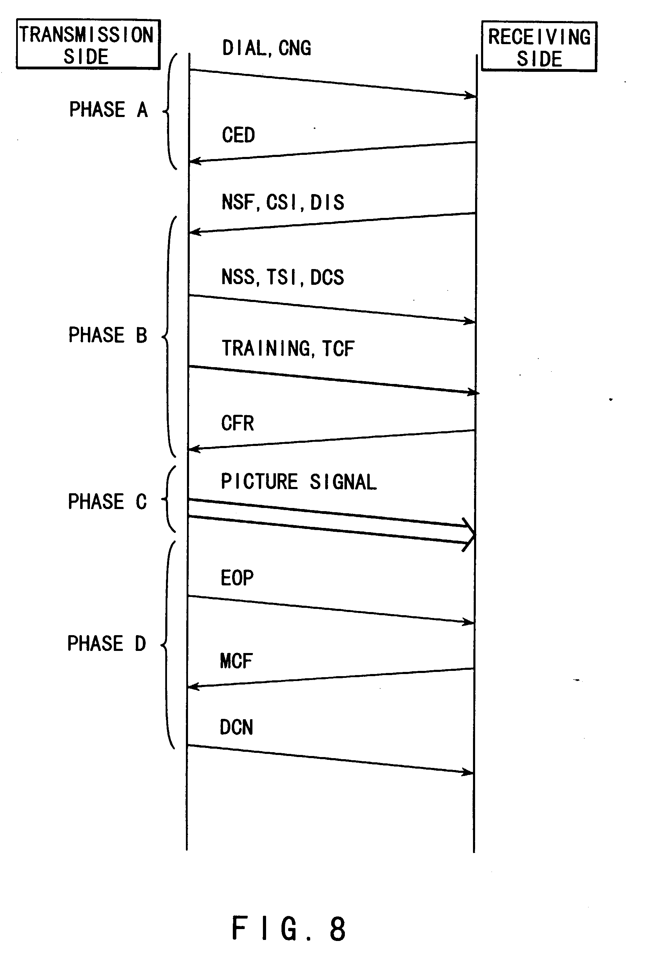

FIG. 8 shows controls of data transmission and receipt in a G3 facsimile mode (T. 30). FIG. 8 shows an operation with which an original document composed of one page has been normally transmitted by a direct transmission method.

Initially, an operator of the transmission side station sets, to the original document retainer, an original document to be transmitted, and then inputs the address (that is, dials). Then, the transmission start button of the transmission side is depressed to make an access to a public line and transmits information of the dial to the public line. Then, the transmission side transmits a tonal signal (CNG: calling tone) indicating transmission from a facsimile terminal and waits for a response signal from the receiving side station.

The receiving side station monitors a calling signal which is transmitted from an exchanger. When the receiving side station detects the calling signal, the receiving side station accesses a public line and transmits, as response signals, a tonal called station identification signal (CED: called station identification), a digital non-standard facility instruction signal (NSF: non-standard facility), a digital called station identification signal (CSI: called station identification) and a digital identification signal (DIS: digital identification signal).

In accordance with the DIS, standard facilities, such as the recording resolution, the recording line processing speed, the maximum recording size, and coding method, can be confirmed. In accordance with the NSF and CSI, the ID of the receiving side and the non-standard facility can be confirmed.

When the transmitting station has detected the CED, NSF, CSI and DIS signals transmitted by the receiving side station, the transmitting station confirms the performance to determine the size of data to be transmitted, the resolution and the coding method, followed by transmitting a digital command signal (DCS: digital command signal) as a standard facility.

The transmitting station has non-standard facilities to transmit non-standard facility command signal (NSS: non-standard facility command) and transmitting station identification (TSI: transmitting station identification) to present the facilities in response to the NSF and CSI and transmit the ID of the transmitting station. Then, the transmitting station transmits a training and TCF signal, which are highspeed signals, to confirm the quality of the public line. The training signal, which is an all-zero signal in a predetermined period, is received by the receiving station to confirm that all of the factors are normally zero.

After the receiving station has confirmed that the training has been performed normally, the receiving station transmits a receipt preparation confirmation signal (CFR: confirming to receive). The foregoing procedure from transmission of the NSF, CSI and DIS from the receiving station to completion of the CFR signal from the receiving station is called phase B (pre-communication procedure).

When the pre-communication procedure has been completed in phase B, the transmitting station transmits a picture signal (image information).
The foregoing process is called phase C (during communication). When the transmitted picture is has been transmitted normally, the transmitting station transmits a procedure end signal (EOP: end of procedure).

The receiving station confirms normal receipt of the picture signal, and then transmits a message confirmation signal (MCF: message confirmation) in response to the EOP signal.

The transmitting station performs a procedure for completing the communication such that it transmits a disconnection command (DCN: disconnect) to open the public line.

The receiving station receives the DCN command, and then opens the public line. The process from transmission of the EOD from the transmitting station to receipt of the DCN by the receiving station is called phase D.

The tonal signal (CNG: calling tone) is a signal indicating a non-voice terminal and transmitted from the transmitting station. The tonal called station identification signal (CED: called station identification) is a signal which is transmitted after the receiving station has been connected to the public line. The digital non-standard facility signal (NSF: non-standard facility) is a signal for identifying a demand from a specific user in a range outside the T-series recommendation.

The digital called station identification signal (CSI: called station identification) is a signal having prepared information representing the facility of the terminal and indicating the receiving station with an international telephone number. The digital identification signal (DIS: digital identification signal) is a signal indicating a fact that the receiving station has a CCITT standard receiving facility.

The non-standard facility command signal (NSS) is a command signal indicating the facility selected from the non-standard facilities indicated with the NSC or NSF. The transmitting station identification (TSI) signal is a signal having prepared information representing the facilities of the terminal and indicating the transmitting station with an international telephone number.

The digital command signal (DCS: digital command signal) is a command signal indicating the facility selected from the standard facilities indicated with the DIS. The training and TCF signal is used to confirm the training of the modem for receiving a picture signal and examine whether or not the channel can be used at the set transmission speed. The receipt preparation confirmation signal (CFR) is a response signal indicating completion of the procedure required before the picture is transmitted and permission of transmission of the picture signal.

The procedure end signal (EOP) is a signal indicating end of the transmission of the picture signal. The message confirmation is (MCF) is a confirmation signal indicating affirmative response to the EOP and complete receipt of the picture signal. The disconnection (DCN) signal is a signal indicating start of disconnection of the line and requiring no response.

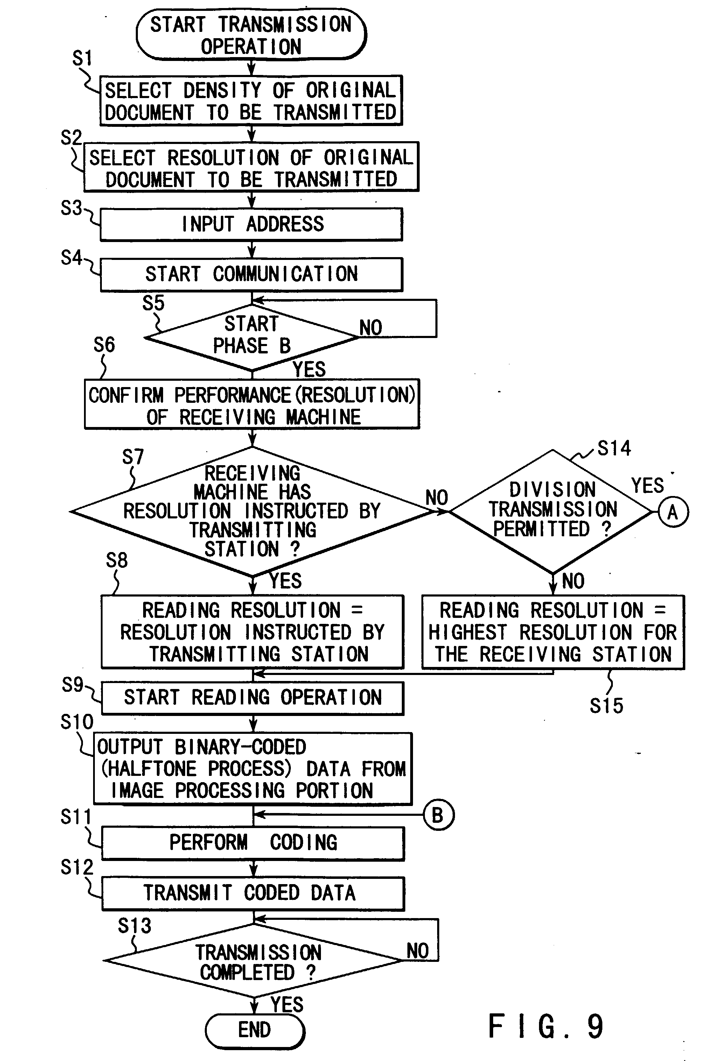

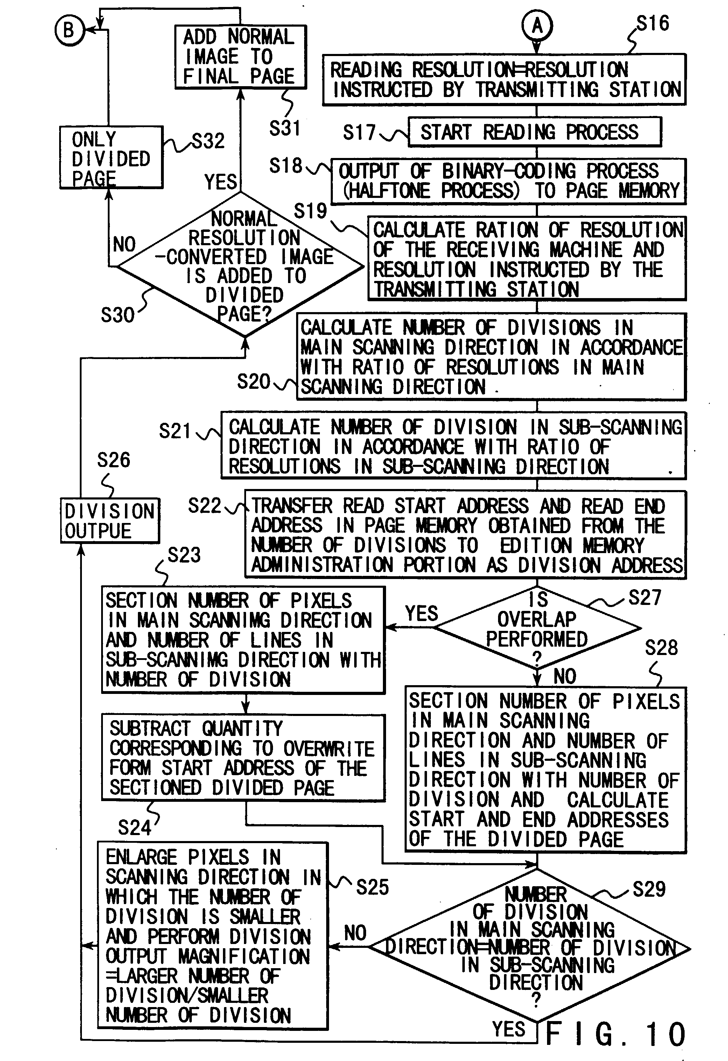

A direct facsimile transmission operation of the digital copying machine capable of performing the facsimile communication will now be described with reference to flow charts shown in FIGS. 9 and 10.

Initially, an operator sets, on the document retainer 5, an original document required to be transmitted so that the transmission operation is started. A facsimile transmission mode is selected from the various modes displayed on the message display unit 93 of the operation panel 114, and then the density of the original document to be transmitted is selected from the displayed densities (S1). Then, the resolution of the original document to be transmitted is selected (S2), and then the dial number of the destined station is input by using the ten key pad 105 (S3).

Then, the main CPU 100 responds to depression of the communication start key 120 on the operation panel 114 to transmit the CNG so that transmission is started (S4) and the phase B is started (S5). During the phase B, the transmitting station receives the DIS signal transmitted from the receiving station to confirm the facilities (including the resolution) of the receiving machine (S6) such that whether or not the receiving machine has the resolution instructed by the transmitting station among the resolutions of the confirmed facilities of the receiving machine (S7).

If the receiving machine has the instructed resolution, setting is performed such that the reading resolution = instructed transmission selection (S8) so that a reading process is started by the scanner portion 313. The reading operation is performed such that binary data (subjected to a half tone process) is output from the image processing portion 314 (S10), and then data above is coded by the CODEC 244 (S11). Then, coded data is transmitted through the modem 242 (S12). When transmission has been completed (S13), the process is ended.

If the receiving machine has not the instructed resolution, the main CPU 100 determines whether or not a division transmission process is permitted, that is, transmission such that enlargement or division of the image of the original document is permitted (S14). In this embodiment, whether or not the division transmission is performed is previously determined by input which is performed by the operator by using the message display portion 93 of the operation panel 114.

The input operation has three modes consisting of instruction of permission/inhibition of the division, instruction of permission/inhibition of overwriting when the division is performed and instruction of permission/inhibition of transmission such that data which is not divided for confirming the image of the original document when the division transmission is performed and which has been subjected to a resolution change process is added.

The following flow includes a flow for performing a determination by an operator when the division transmission is performed.

If the division process is inhibited in step S14, setting is performed such that the read resolution = the highest resolution of the receiving machine (S15), and then a reading process is started (S9).

If the division transmission is permitted in step S14, setting is performed that the reading resolution = resolution instructed by the transmitting station (S16) so that the reading process is started by the scanner portion 313 (S17). In this case, a division transmission flow starts. After the reading operation has been started, an output representing a result of the binary-coding process (the half tone process) from the image processing portion 314 is supplied to the page memory 323.

Then, the number of pages to be divided is determined by the main CPU 100 by calculating the ratio of the resolution of the receiving machine and the resolution instructed by the transmitting station (S19). In accordance with a result of the calculation performed in step S19, the number of divisions in the main scanning direction is calculated (S20), and then the number of divisions in the sub-scanning direction is calculated (S21). After the number of divisions has been determined, the read start address and the read end address of the page memory 323 are notified to the address control portion 360 (S22).

At this time, the main CPU 100 confirms setting of overwriting (S27). If overwriting is permitted, the main CPU 100 divides the number of the pixels to be scanned and the number of the lines in the sub-scanning direction with the number of divisions (S23). The number of divisions corresponding to the ratio of the resolutions of the transmitting machine and the receiving machine. Thus, the resolution of the transmitting machine is twice that of the receiving machine, the number of divisions is "2". The main CPU 100 calculates the scanning start address and the end address of the divided page. The scanning start address and the end address of pages following the second page of the divided pages are subtracted by the quantity corresponding to overwriting (S24).

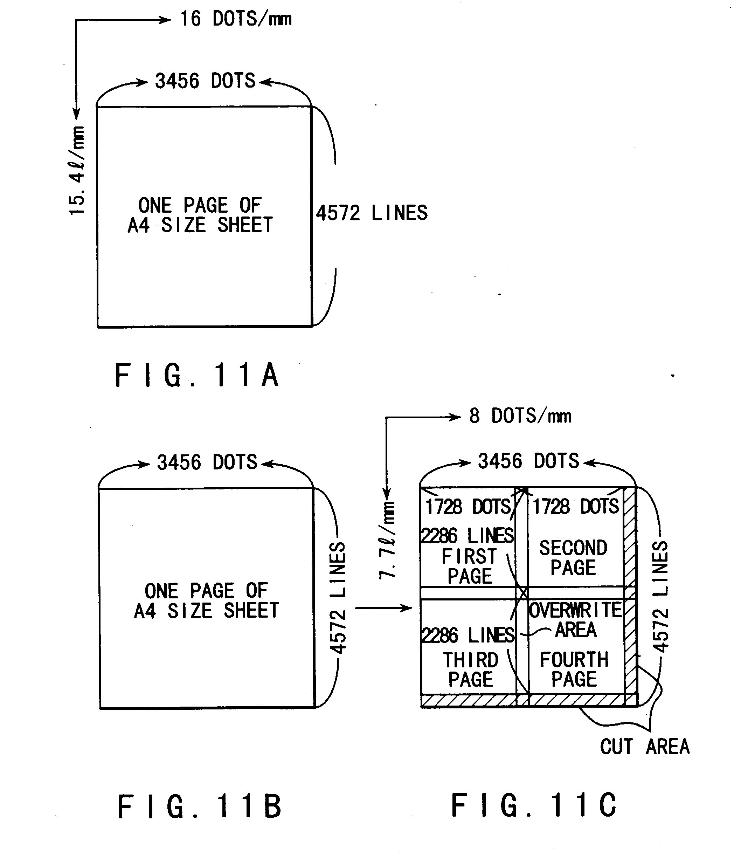

An image subjected to the division process and setting of the address to the address control portion 360 are shown in FIG. 11.

FIG. 11A shows picture information read by the scanner 2 having size of A4 and a resolution of 16 dots:15.41/mm (that is, 16 dots/mm in the main scanning direction and 15.4 lines/mm in the sub-scanning direction). One page of a A4 size image is structured such that the number of pixels in the main scanning direction is 3456 dots and the number of lines in the sub-scanning direction is 4752 lines. The address of the page memory 323 is, in this case, such that input main scan start address: 0000, input scan end address: 3455, input sub-scan start address: 0000, and input sub-scan end address: 4571.

Picture information stored in the page memory 323 shown in FIG. 11B is divided into four sections as shown in FIG. 11C. The reason for this will now be described. Since the resolution of the receiving machine is 8 dot/mm × 7.71/mm, the ratio of the main scan resolution is 16 dot/mm × 8 dot/mm. Therefore, the main scanning direction is divided into two sections. Since the ratio of the sub-scan resolution is 15.41/mm:7.71/mm, the sub-scanning direction is divided into two sections.

Referring to FIG. 11C, output address (10 dots of overwrite performed) from the page memory 323 is as follows:

The first page is such that output main scan start address: 0000, output main scan end address: 1727, output sub-scan start address: 0000 and output sub-scan end address: 2285.

The second page is such that output main scan start address: output main scan start address: 1717, output main scan end address: 3445, output sub-scan start address: 0000 and output sub-scan end address: 2285.

The third page is such that output main scan start address: 0000, output main scan end address: 1727, output sub-scan start address: 2275 and output sub-scan end address: 4561.

The fourth page is such that output main scan start address: 1717, output main scan end address: 3455, output sub-scan start address: 2275 and output sub-scan end address: 4561.

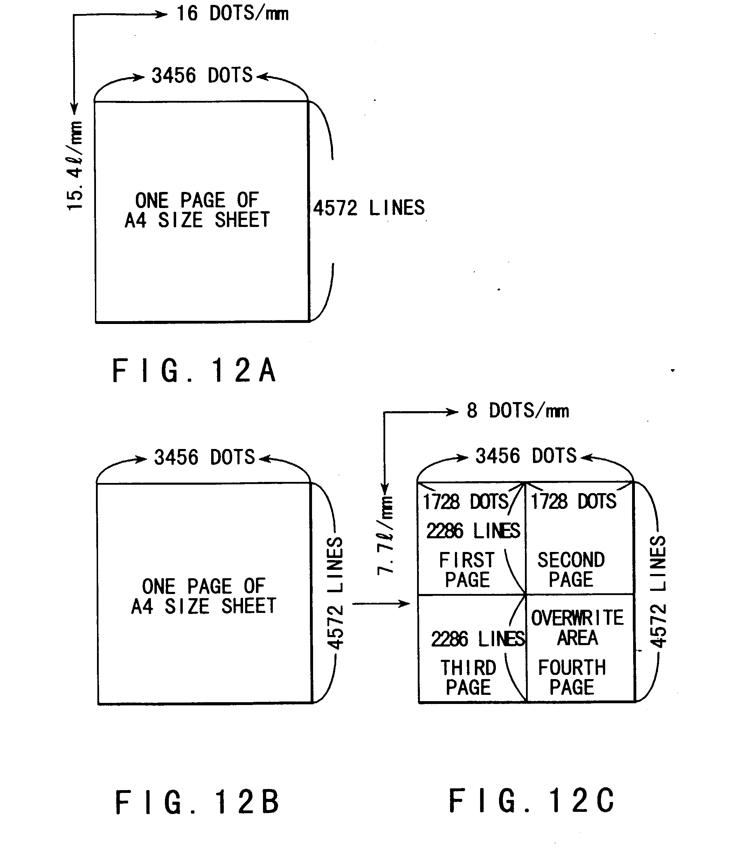

If the overwrite is inhibited in step S27, the main CPU 100 sections the number of the pixels in the main scanning direction and the number of lines in the sub-scanning direction with the number of divisions so as to calculate start and end addresses of the divided page (S28). An image subjected to the division process and setting of the address to the address control portion 306 are shown in FIG. 12.

FIG. 12A shows picture information read by the scanner 2 in a case where the size is A4 and the resolution is 16 dots × 15.41/mm. One page of a A4 size image is structured such that the number of pixels in the main scanning direction is 3456 dots and the number of lines in the sub-scanning direction is 4752 lines. In this case, the address of the page memory 323 is, as shown in FIG. 12B, such that input main scan start address: 0000, input scan end address: 3455, input sub-scan start address: 0000 and input sub-scan end address: 4571.

When picture information stored in the page memory 323 shown in FIG. 12B is divided into four sections (divided into two sections in the main scanning direction and divided into two sections in the sub-scanning direction) because the resolution of the receiving machine is 8 dots × 7.71/mm, divided images are as shown in FIG. 12C. Referring to FIG. 12C, output address (no overwrite) of the page memory 323 is as follows:

The first page is such that output main scan start address: 0000, output main scan end address: 1727, output sub-scan start address: 0000 and output sub-scan end address: 2285.

The second page is such that output main scan start address: 1728, output main scan end address: 3455, output sub-scan start address: 0000 and output sub-scan end address: 2285.

The third page is such that output main scan start address: 0000, output main scan end address: 1727, output sub-scan start address: 2286 and output sub-scan end address: 4571.

The fourth page is such that output main scan start address: 1728, output main scan end address: 3455, output sub-scan start address: 2286 and output sub-scan end address: 4571.

Then, the main CPU 100 determines whether or not the number of divisions in the main scanning direction and the number of divisions in the sub-scanning direction are the same (S29). If they coincide with each other, the address calculated in step S24 or step S28 is notified to the address control portion 360 so that divided picture information is output from the modulation circuit 232 (S26).

At this time, whether or not transmission of an image, which has not been divided but subjected to a resolution conversion process for confirming the image of the original document and which is added to the divided image has been instructed by the operator is determined (S30). If foregoing transmission has been instructed, the resolution of picture information stored in the page memory 323 is converted to that of the receiving machine by using the resolution conversion/binary rotating means 325. Then, the image, the resolution of which has been converted, is added to follow the final page of the division-transmitted-image as a pre-division image.

If the number of divisions in the main scanning direction and the number of divisions in the sub-scanning direction are, in step S29, not the same, a process is performed in which the larger number of division is employed and picture information of the divided images are made to be similar figures. That is, the images divided into small number of sections are enlarged and then divided (S25). In this case, the enlargement magnification = the larger number of division/smaller number of division.

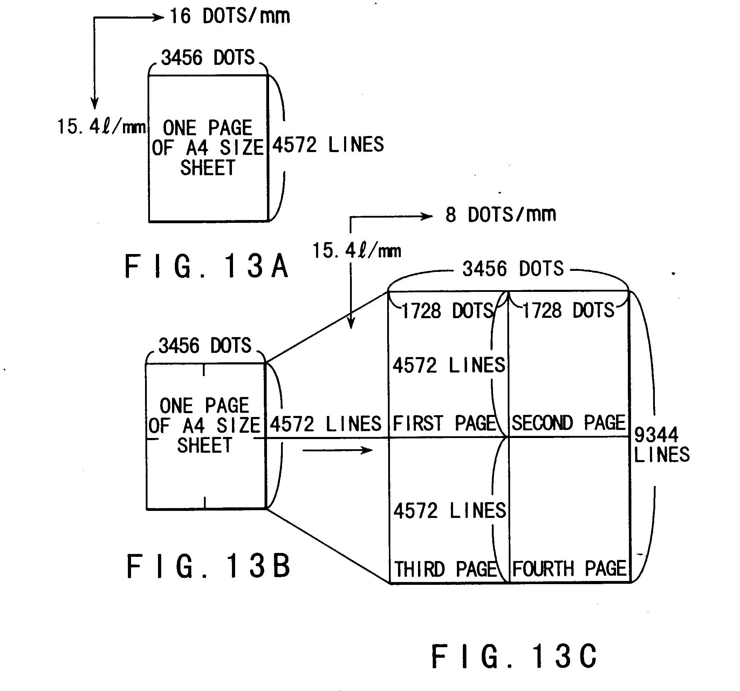

The divided images, setting of memory administration address and setting the enlargement magnification of the image divided into smaller number of division are shown in FIG. 13.

FIG. 13A shows picture information read by the scanner 2 and having size of A4 and a resolution of 16 dots × 15.41/mm. One page of an A4-size image is formed such that the number of pixels in the main scanning direction is 3456 dots and the number of lines in the sub-scanning direction is 4572 lines. The address in the page memory 323 is, in this case, such that input main scan start address: 0000, input scan end address: 3455, input sub-scan start address: 0000 and input sub-scan end address: 4571, as shown in FIG. 13B.

Picture information stored in the page memory 323 shown in FIG. 13B is divided as shown in FIG. 12C. Since the resolution of the transmitting machine in the main scanning direction is 16 dots/mm and that of the receiving machine is 8 dots/mm, the number of divisions in the main scanning direction is two and the resolutions of the transmitting machine and the receiving machine in the sub-scanning direction is 15.41/mm. Therefore, the number of divisions in the sub-scanning direction is one. If the image divided into the foregoing number of sections is transmitted, an image compressed vertically is, however, transmitted.
Therefore, the image is enlarged in the sub-scanning direction and it is transmitted. The magnification in the sub-scanning direction is 2/1 = 2 because the magnification in the sub-scanning direction is arranged such that larger number of division/smaller number of division.

Referring to FIG. 13C, output address (no overwrite) from the page memory 323 is as follows: the first page is such that output main scan start address: 0000, output main scan end address: 1727, output sub-scan start address: 0000 and output sub-scan end address: 2285. Moreover, the enlargement magnification in the sub-scanning direction is two times.

The second page is such that output main scan start address: 1728, output main scan end address: 3455, output sub-scan start address: 0000 and output sub-scan end address: 2285 and the enlargement magnification in the sub-scanning direction is two times.

The third page is such that output main scan start address: 0000, output main scan end address: 1727, output sub-scan start address: 2286 and output sub-scan end address: 4571 and the enlargement magnification in the sub-scanning direction is two times.

The fourth page is such that output main scan start address: 1728, output main scan end address: 3455, output sub-scan start address: 2286 and output sub-scan end address: 4571 and the enlargement magnification in the sub-scanning direction is two times.

The main CPU 100 divides and outputs picture information divided in step S25 and stored in the page memory 323 (S26). Then, whether or not a usual image having the converted resolution is added is determined (S30). If the image above is added, the usual image is added to the first page (S31). If the image is not added, only the divided page is determined to be transmitted (S32).

The main CPU 100 causes the CODEC 244 to code data above (S11), transmits coded data through the modem 242 (S12), and completes the process when the transmission has been completed (S13).

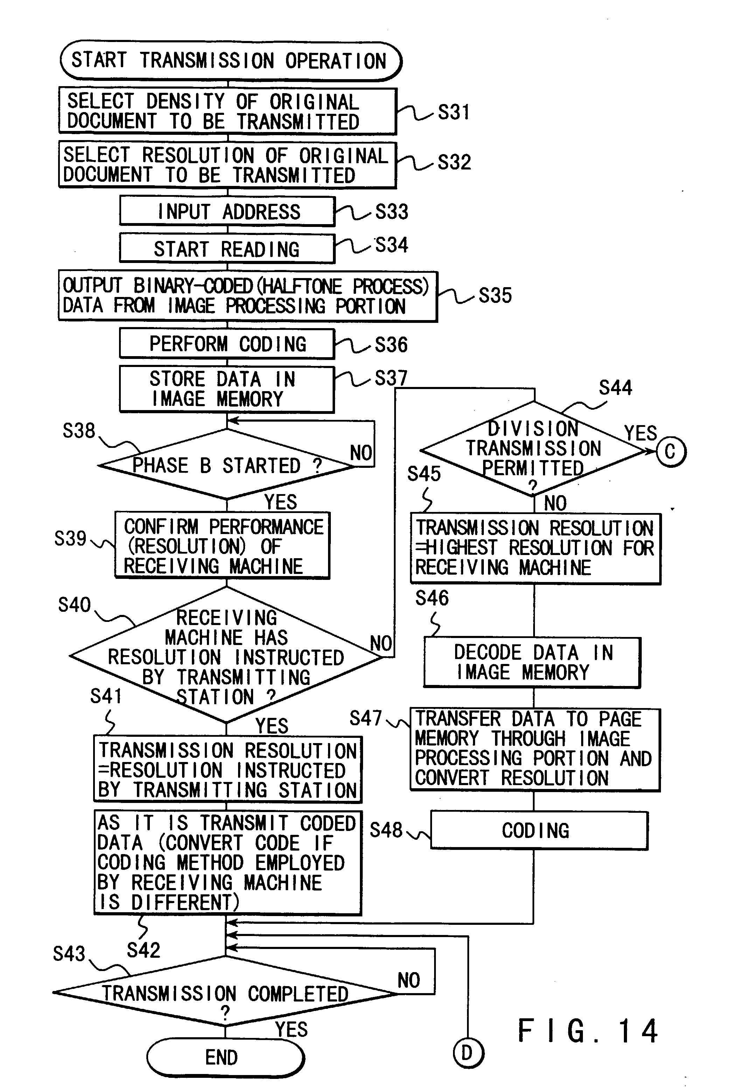

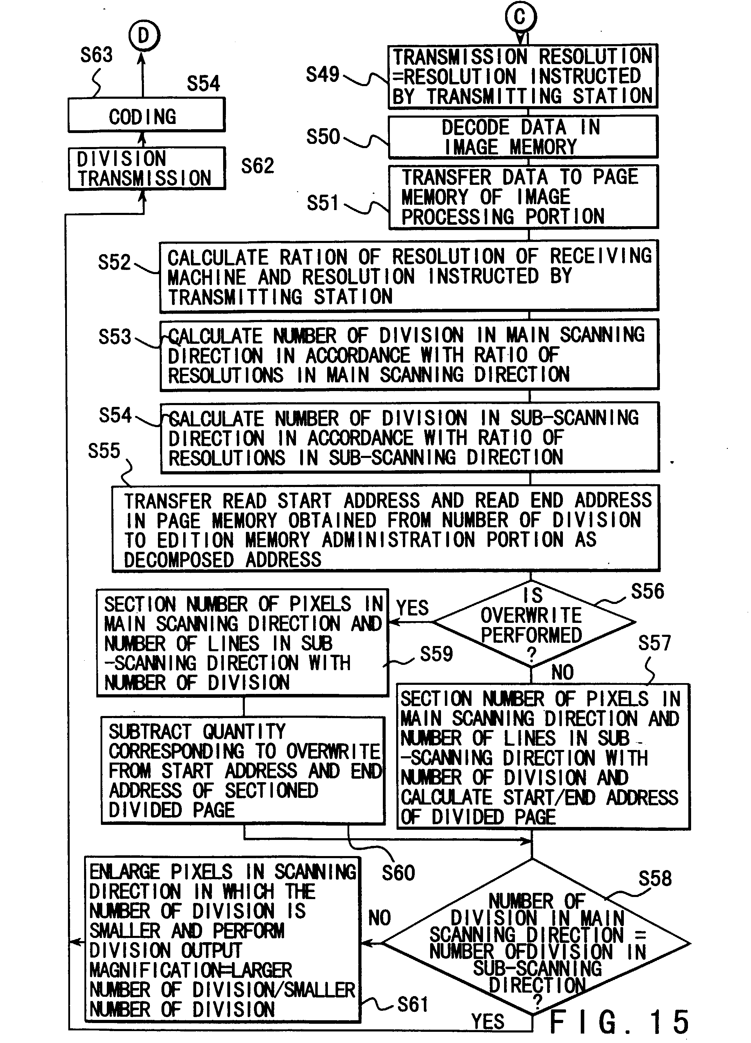

Then, a facsimile operation of the digital copying machine in a memory transmission mode will now be described with reference to flow charts shown in FIGS. 14 and 15.

The operator sets an original document on the document retainer 5 so that the transmission operation is started. Then, the operator selects the facsimile transmission mode from the various mode displayed on the message display unit 93 of the operation panel 114, and then the displayed density of the original document is selected (S31). Then, the resolution of the original document to be transmitted is selected (S32). Then, the telephone number of the destined station is input by using the ten key pad 105 (S33).

Then, the main CPU 100 starts reading when the communication start key 120 of the operation panel 114 has been depressed (S34).

As a result of the reading operation performed by the scanner portion 313, binary-coded (halftone-processed) data is output from the image processing portion 314 (S35), output data is coded by the CODEC 244 (S36), and then coded data is stored in the image memory 106 (S37).

Then, the main CPU 100 starts the phase B (S38). In the phase B, the transmitting station receives the DIS signal transmitted from the receiving machine to confirm the performance (including the resolution) of the receiving machine (S39).

Then, whether or not the receiving machine has the resolution instructed by the transmitting station included in the confirmed performance of the receiving machine (S40).

If the receiving machine has the instructed resolution, the main CPU 100 makes the transmission resolution = instructed transmission resolution (S41). Then, coded data stored in the image memory 106 is transmitted as it is or the code is converted if the receiving machine has a different coding method and data is transmitted (S42). Moreover, the recording size of the receiving machine and the like are confirmed. If necessary, reduction transmission may be performed. When transmission has been completed (S43), the process is ended.

If the receiving machine has not the instructed resolution in step S40, the main CPU 100 determines whether or not the division transmission is permitted (S44). If the division transmission is inhibited, the main CPU 100 makes the transmission resolution = the highest resolution of the-receiving machine (S45). Then, data stored in the image memory 106 is decoded by the CODEC 246 (S46), and then data is transferred to the page memory 323 through the image processing portion 314. Then, the resolution conversion/binary rotating means 325 is operated to convert the resolution (S47). Data, the resolution of which has been converted by the resolution conversion/binary rotating means 325 is supplied to the CODEC 244 so as to be coded (S48), and then transmitted.

If the division transmission is permitted in step S44, setting is performed such that the reading resolution = resolution instructed by the transmitting station (S49). Then, data stored in the image memory 106 is decoded by the CODEC 246 (S50), and then.data is transferred to the page memory 323 through the image processing portion 314. Then, the memory administration and edition facility is used to perform the division transmission.

In this case, the division transmission flow starts.

Then, the main CPU 100 determines the number of pages to be divided by calculating the ratio of the resolution of the receiving machine and the resolution instructed by the transmitting station (S52). In accordance with a result of the calculation performed in step S52, the number of division in the main scanning direction is calculated (S53). Then, the number of division in the sub-scanning direction is calculated (S54). After the number of division has been determined, the read start address and the read end address of the page memory 323 are determined in accordance with the number of division and set to the address control portion 360 (S55).

At this time, the main CPU 100 confirms overwrite (S56). If overwrite is permitted, the number of pixels in the main scanning direction and the number of lines in the sub-scanning direction are divided with the number of division (S59). Then, the start address and the end address of the divided pages following the second page are subtracted by the quantity corresponding to the overwrite (S60). Divided images and setting of the address to the address control portion 360 are shown in FIG. 11.

If overwrite is inhibited in step S56, the main CPU 100 divides the number of pixels in the main scanning direction and the number of lines in the sub-scanning direction with the number of division to calculate the start/end address of the divided page (S57). Divided images and setting of the address to the memory administration portion are shown in FIG. 12.

Then, the main CPU 100 determines whether or not the number of divisions in the main scanning direction and that in the sub-scanning direction are the same (S58). If they are the same, the address calculated in step S57 or step S60 is set to the address control portion 360 so that the division output is performed (S62).

If the number of division in the main scanning direction and that in the sub-scanning direction are not the same in step S58, a process is performed in which the larger number of division is employed and picture information of the divided images are made to be similar figures. That is, the images divided into small number of sections are enlarged and then divided (S61). In this case, the enlargement magnification = the larger number of division/smaller number of division. Divided images, setting of the memory administration address and setting of the enlargement magnification in the direction of the smaller number of division are shown in FIG. 13.

Picture information divided in step S61 and stored in the page memory 323 is divided and output (S62). The main CPU 100 is coded by the CODEC 244 (S63) so as to be transmitted.

A facsimile apparatus according to a second embodiment of the present invention will now be described.

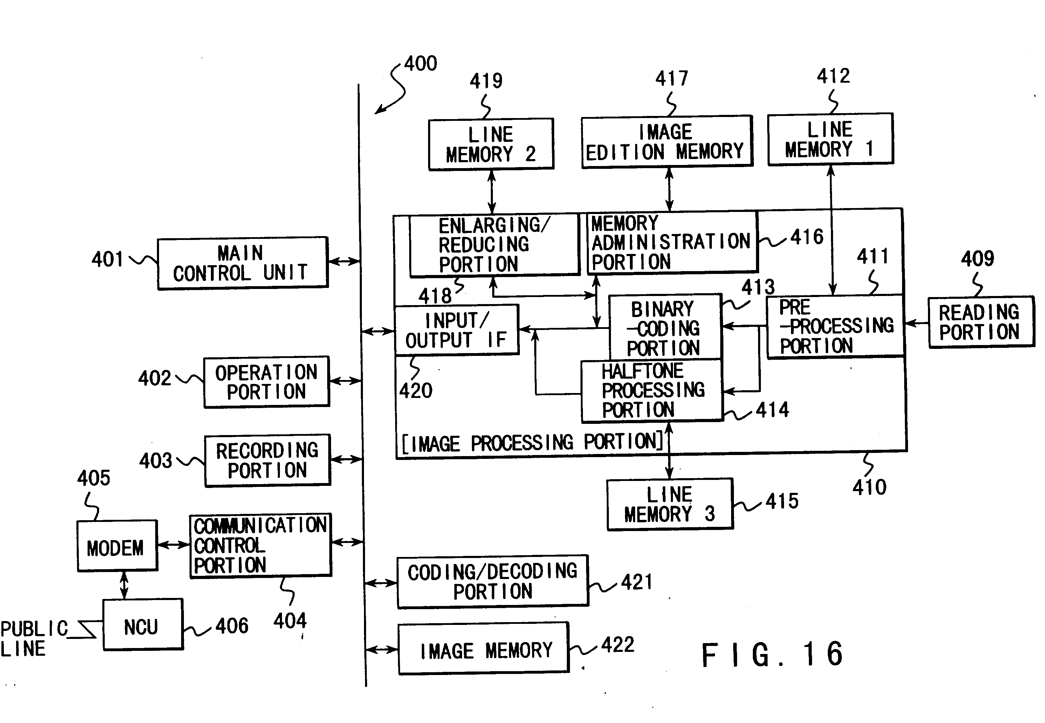

FIG. 16 schematically shows the structure of a facsimile apparatus 400. The facsimile apparatus 400 has a main control unit 401 comprising a microcomputer for totally controlling the operation of the facsimile apparatus 400. An operation portion 402 has a display portion for operating from outside of the facsimile apparatus 400 and displaying a state of the operation of the facsimile apparatus 400. A recording portion 403 output supplied data and a communication report. A communication control portion 404 controls dial transmission, call receipt detection and communication procedure of data to be transmitted and received data so as to communicate data.

A modem 405 modulate/demodulate data to be communicated. A NCU 406 is a network terminate circuit for accessing/opening a public line. A reading portion 409 has a light source, a photoelectric conversion device for reading an original document to be transmitted, a gain adjustment circuit for adjusting the level of a video signal supplied from the photoelectric conversion device, an A/D conversion device and the like.

An image processing portion 410 is a processing portion for converting a multivalue digital signal supplied from the reading portion 409 and obtained by A/D conversion into binary digital signal to be facsimile-transmitted/received.

The image processing portion 410 comprises a pre-processing portion 411, a line memory 412, a binary-coding portion 413, a half-tone processing portion 414, a line memory 415, a memory administration portion 416, an image edition memory 417, an enlarging/ reducing portion 418, a line memory 419 and an input/output IF 420.

The pre-processing portion 411 performs shading correction, removal of the base of the original document, compensation of the resolution (thin line emphasis) and gradation correction (γ correction).

The line memory 412 is a read and write enable memory for storing reference data for use in the shading correction and previous line data for use in the filtering process.

The binary-coding portion 413 converts multivalue data processed by the pre-processing portion 411 with an arbitrary threshold value into white and black binary data. The half-tone processing portion 414 subjects multivalue data processed in the pre-processing portion 411 to a pseudo half tone pattern process to binary-code the same. The line memory 415 is a read and write enable memory for use to parallel-process the previous line when the halftone pattern process is performed.

The image edition memory 417 is a read and write enable page memory for storing data binary-coded by the binary-coding portion 413 or the half-tone processing portion 414. The memory administration portion 416 administrates start and end addresses for input/output to and from the image edition memory 417. In this embodiment, main scan start address, sub-scan start address, main scan end address and sub-scan end address are set to the memory administration portion 416 so that input and output are performed.

The enlarging/reducing portion 418 sets enlargement/reduction magnification of binary data read from the image edition memory 417 or binary data output from the binary-coding portion 413 and the half-tone processing portion 414 in each of the main scanning direction and the sub-scanning direction. When data is enlarged, data interpolation is performed. When data is reduced, thinning is performed.

The line memory 419 isa read and write enable memory for storing information of line before information is used in the interpolation process or the reduction process which is performed by the enlarging/ reducing portion 418. The input/output IF 420 is an interface portion for communicating binary data processed by the image processing portion 410 to another device of the apparatus. Moreover, the input/output IF 420 has a serial/parallel conversion function for converting binary data processed in pixel units in the image processing portion 410 into parallel data in 8/16 bit units.

The coding/decoding portion 421 codes binary data output from the image processing portion 410 or decodes coded data which has been received. The image memory 422 stores data subjected to the coding process in the coding/decoding portion 421 or received data.

The facsimile apparatus 400 having the above-mentioned structure is able to perform the facsimile operation as shown in flow charts shown in FIGS. 9, 10, 14 and 15, similarly to the facsimile communication which is performed by the above-mentioned digital copying machine.

As described above, the image information transmitting apparatus according to the present invention is able to facsimile-transmit image information by dividing the same in place of reducing the image information to be adaptable to the resolution of the receiving machine if the resolution of the receiving machine is lower than the resolution instructed by the transmitting station. Therefore, image information, such as fine character original document and an original document subjected to a halftone process can be transmitted to the receiving machine without a necessity of thinning image information.

## Claims

1. An image information transmitting apparatus comprising:
means (114, S2) for instructing transmission conditions of image information including resolution of image information when image information is transmitted and providing the instructed resolution;
means (100, S4) for calling a destined station to which image information is transmitted;
receiving means (100, S6) for receiving response information returned from the destined station in response to a call made by said calling means and including the resolution of the destined station;
means (S7) for determining whether or not the resolution of the destined station included in response information received by said receiving means is lower than the instructed resolution provided by said instructing means;
means (313, S17) for reading an image of an original document with the instructed resolution to provide image information;
means (100, S26) for dividing image information when the resolution of the destined station is lower than the instructed resolution; and
means (312) for sequentially transmitting image information divided by said dividing means.

2. An apparatus according to claim 1, characterized by further comprising
permission setting means (S14) for setting whether or not division transmission is permitted when image information is transmitted, wherein
said dividing means divides and transmits image information only in a case where division transmission is set by said permission setting means.

3. An apparatus according to claim 2, characterized in that said reading means (313, S17) has means (S8) for reading the original document with the resolution of the destined station in a case where the resolution of the destined station is lower than the instructed resolution and division transmission is not permitted by said permission setting means.

4. An apparatus according to claim 1, characterized by further comprising image forming means for forming an image in accordance with image information read by said reading means (313, S17).

5. An apparatus according to claim 1, characterized in that said dividing means (100, S26) includes
comparison means (S7) for subjecting the resolution of the destined station included in the response signal received by said receiving means (S6) and the instructed resolution provided by said instruction means to a comparison;
means (S19) for calculating the ratio of the resolutions of the destined station and the transmitting station in a case where a result of a comparison performed by said comparison means (S7) is such that the resolution of the destined station is lower than the instructed resolution; and
means (S22) for dividing image information in accordance with the ratio of the resolutions calculated by said calculating means (S19).

6. An apparatus according to claim 5, characterized in that said dividing means (100, S26) includes
means (S20, S21) for determining the number of division of image information in accordance with the ratio of the resolutions calculated by said calculating means, and
means (S25) for enlarging image information in a scanning direction which is divided with a smaller number and dividing enlarged image information with a larger number of division in a case where the number of division determined by said determining means (S20, S21) is different between the main scanning direction and the sub-scanning direction.

7. An apparatus according to claim 1, characterized in that said dividing means (100, S26) includes
means (S24) for dividing image information such that adjacent boundary portions are overlapped in a case where the resolution of the destined station included in the response signal received by said receiving means is lower than the instructed resolution provided by said instructing means, and
means (S31) for adding image information which is not divided to divided image information to be transmitted by said transmission means and for performing transmission.

8. An apparatus according to claim 1, characterized by further comprising
halftone processing means (S10) for subjecting an image read by said reading means to a halftone process,
wherein
said dividing means has means for dividing image information processed by said halftone processing means.

9. An image information transmitting method comprising the steps of:
reading (S34) an image of an original document;
storing (S37) read image information;
instructing (S32) transmitting condition of stored image information including an instructed resolution when image information is transmitted;
calling (S38) a destined station to which image information is transmitted;
receiving (S39) response information returned from the destined station in response to the call;
dividing (S62) image information in a case where the resolution of the destined station included in received response information is lower than the resolution instructed in said instructing step; and
sequentially transmitting (S43) divided image information.
